# FASCICULE DE BREVET EUROPEEN

(11) **EP 2 282 851 B1**
(45) Date de publication et mention de la délivrance du brevet: **23.11.2011**
(21) Numéro de dépôt: 09761873.0
(22) Date de dépôt: 19.05.2009
(51) Int. Cl.: B09B 3/00

(54) **PROCEDE DOMESTIQUE DE TRAITEMENT DES DECHETS ORGANIQUES**
HAUSHALTSVERFAHREN ZUR VERARBEITUNG ORGANISCHER ABFÄLLE
DOMESTIC METHOD FOR PROCESSING ORGANIC WASTE

(30) Priorité: 19.05.2008 FR 0802692
(43) Date de publication de la demande: 16.02.2011
(73) Titulaire: SARL Composphère, 91240 Saint-Michel-sur-Orge (FR)
(72) Inventeur: Grégoire, Eric, 59500 Douai (FR)
(74) Mandataire: Boubal, Denis Henri Jacques
(86) Numéro de dépôt international: PCT/FR2009/000581
(87) Numéro de publication internationale: WO 2009/150322

(56) Documents cités:
- EP-A- 1 170 354
- EP-A- 1 210 989
- EP-A- 1 502 667
- WO-A-2004/024335
- WO-A-2006/097952
- US-A- 5 035 189

## Description

L'invention concerne un procédé domestique de traitement des déchets organiques, dans lequel les matières organiques sont collectées, réduites de volume et stabilisées.

On entend par stabiliser l'action de rendre inertes les matières organiques de sorte à stopper l'activité microbactérienne et ainsi leur odeur, au moins pour un certain temps (quelques jours ou semaines). Le processus de fermentation est ainsi mis en veille.

Le procédé conforme à l'invention permet ainsi de transformer les matières organiques de leur statut initial de déchets en un produit plus valorisable, notamment moins encombrant et moins repoussant.

Ce produit peut notamment trouver une application, par exemple, dans l'une des filières de destination telles que le compostage, la méthanisation ou encore comme combustible, notamment pour la production d'électricité.

L'invention concerne également un dispositif domestique de traitement des matières organiques convenant pour la mise en oeuvre du procédé. Ce dispositif est domestique, aux dimensions permettant de s'intégrer dans une habitation telle que par exemple dans une cuisine.

On connaît du document WO 2004/024355 ou du document WO 2006/097952, un procédé de traitement des déchets organiques qui peut être considéré comme faisant partie de l'état de la technique de la présente invention.

Plus particulièrement, le procédé mis en oeuvre dans le document WO 2004/024355 comprend la succession des étapes suivantes et, effectuées dans cet ordre :
- collecter les matières organiques,
- réduire la matière organique en plus petits morceaux, notamment au moyen de déchiqueteuse, hâcheuse, mélasseur ...,
- sécher suffisamment les produits afin de faire chuter l'activité microbiologique, par exemple par pressage, élaboration, sublimation, notamment à l'aide de différents moyens tels que des moyens de chauffage ou encore de ventilation.

Ce procédé peut présenter plusieurs variantes notamment dans lequel on ajoute de l'eau afin de faciliter la réduction de matières, notamment de sorte à former une boue qui peut être mélangée avec un liant. Cet apport en eau doit toutefois être ensuite retiré lors du séchage afin de stabiliser les produits, ce qui rend le procédé particulièrement gourmand en énergie.

Dans le document WO 2006/097952, un procédé comparable est mis en oeuvre et permet de transformer des matières organiques en des matériaux inertes sous la forme de briques.

Le dispositif du document WO 2006/097952 est domestique et comprend tout d'abord une paire de rouleaux à couteau à travers lesquels les déchets collectés sont déchiquetés et réduits de volume. Les matières déchiquetées tombent dans le berceau d'un convoyeur à vis qui transporte les matières en les mélangeant avec de l'eau. Suit ensuite une étape d'ébullition afin d'hygiéniser et de stopper l'activité bactérienne. Un piston vient ensuite presser le mélange hygiénisé à travers la trémie d'une cuve. A la fin de cette étape, il est possible d'obtenir une fraction grossière d'une part, une fraction finale issue du pressage d'autre part. Cette fraction issue du pressage est compressée dans une matrice afin d'obtenir une brique.

Le procédé mis en oeuvre dans le dispositif connu précité est particulièrement gourmand en énergie, nécessitant notamment de porter à ébullition une boue, mélange de matières organiques et d'eau.

Le but de la présente invention est de pallier les inconvénients précités en proposant un procédé de traitement des déchets organiques ainsi qu'un dispositif domestique de traitement des matières organiques particulièrement peu gourmand en énergie.

D'autres buts et avantages apparaîtront au cours de la description qui va suivre qui n'est donnée qu'à titre indicatif et qui n'a pas pour but de la limiter.

L'invention concerne tout d'abord un procédé domestique de traitement des déchets organiques, dans lequel les matières sont collectées, réduites de volume et stabilisées afin de limiter, voire stopper l'activité des bactéries.

Selon l'invention, le procédé comprend au moins les étapes suivantes, et réalisées dans cet ordre :
- on collecte les matières organiques et on les dispose en vrac,
- on réduit le poids en eau des matières organiques de sorte à les stabiliser en soumettant lesdites matières en vrac à un flux d'air pulsé, prélevé de l'air ambiant de l'habitation, sans autre apport calorifique.
- on réduit le volume des matières organiques stabilisées, notamment par broyage, déchiquetage, mixage, hâchage, pressage.

L'invention concerne également un dispositif domestique de traitement des matières organiques, convenant pour la mise en oeuvre du procédé, comprenant au moins des moyens pour réduire le volume des déchets organiques et des moyens pour stabiliser les matières organiques.

Selon l'invention, le dispositif comprend :
- des moyens pour réduire le poids en eau des matières organiques de sorte à les stabiliser, consistant essentiellement en des moyens de ventilation,
- des moyens pour réduire le volume des matières organiques stabilisées, notamment par broyage, déchiquetage, mixage, pressage, hâchage.

L'invention sera mieux comprise à la lecture de la description suivante accompagnée des dessins en annexe parmi lesquels :
- la figure 1 est une vue en perspective d'un dispositif de traitement des matières conforme à l'invention selon un mode de réalisation,
- la figure 2 est une vue schématique, de coupe, d'un dispositif de traitement des matières organiques conforme à l'invention selon un mode de réalisation,
- la figure 3 est une vue schématique illustrant un dispositif de traitement des matières organiques conforme à l'invention selon un second mode de réalisation.

L'invention est née de la constatation par l'inventeur qu'il est plus rapide et plus économe en énergie de sécher les matières organiques en vrac, que lorsqu'elles sont réduites de volume et présentent une surface d'échange avec l'air inférieur. En effet, « en vrac », les matières organiques laissent entre elles de nombreux interstices et exposent ainsi une plus grande surface d'échange avec l'air que lorsqu'elles sont réduites de volumes, notamment broyées ou compressées.

Ainsi le procédé conforme à l'invention consiste notamment à effectuer l'étape de séchage (étape de réduction du poids en eau) des matières organiques avant l'étape de réduction du volume des matières organiques.

L'invention concerne ainsi un procédé domestique de traitement des déchets organiques, dans lequel les matières organiques sont collectées, réduites de volume et stabilisées afin de limiter, voire stopper l'activité des bactéries.

Selon l'invention, le procédé comprend au moins les étapes suivantes, réalisées dans cet ordre :
- on collecte les matières organiques et on les dispose en vrac,
- on réduit le poids en eau des matières organiques de sorte à les stabiliser en soumettant lesdites matières en vrac à un flux d'air pulsé, prélevé de l'air ambiant de l'habitation, sans autre apport calorifique.
- on réduit le volume des matières organiques stabilisées, notamment par broyage, déchiquetage, mixage, pressage ou hâchage ...

Par la suite, on désigne par étape de séchage ladite étape dans laquelle on réduit le poids en eau des matières organiques.

Selon l'invention, le procédé est mis en oeuvre dans une habitation domestique. L'air du flux pulsé est ainsi prélevé de l'air ambiant de l'habitation, sans autre apport calorifique et donc sans chauffage. L'inventeur a constaté qu'un flux d'air pulsé à une température de l'ordre de 18 °C ou plus était suffisant pour faire chuter l'activité microbiologique et stabiliser les matières organiques.

L'étape de réduction du poids en eau des matières organiques doit permettre de stabiliser les matières (stopper l'activité microbactérienne et les odeurs). Cette étape de réduction peut consister en un séchage partiel ou total des matières organiques. Lors de ces essais, l'inventeur a constaté qu'une réduction de 60 % du poids en eau des matières organiques était suffisante pour les stabiliser.

L'étape de séchage peut s'étendre sur plusieurs heures, en soumettant lesdites matières audit flux d'air pulsé. La durée de l'étape de réduction peut être comprise entre 4 heures et 20 heures, voire de préférence entre 8 heures et 16 heures, tel que par exemple 12 heures. Le flux pulsé peut être continu ou réalisé par alternance pendant cette durée.

Les matières organiques, objets du traitement, sont, par exemple, les déchets de repas, tels que résidus de viande ou de poisson, résidus de légumes ou de fruits, qui sont de l'ordre de 300 grammes par jour et par personne, en moyenne.

L'avantage du procédé est qu'il peut être mis en oeuvre par un dispositif ne disposant pas de moyen de chauffage, tel que résistance électrique ou similaire, particulièrement gourmande en énergie, pour la réalisation de l'étape de réduction du poids en eau des matières organiques.

Dans le procédé, l'étape de réduction du poids en eau des matières organiques peut être mis en oeuvre au moyen de ventilateur électrique dont la consommation par unité peut être inférieure à 5 W, voire inférieure à 2 W.

L'étape de réduction du poids en eau des matières organiques peut ainsi avoir une consommation moyenne inférieure à 10 W/heure, voire inférieure à 4 W/heure.

L'étape de réduction des matières organiques peut être, telle que développée, une étape de broyage, de déchiquetage, de mixage, de pressage, de mélassage ou tout autre technique de réduction de volume.

On dispose au final d'un procédé, domestique, particulièrement peu gourmand en énergie et simple de réalisation. Telle qu'illustrée aux figures selon un exemple, l'étape de stabilisation de matière peut être réalisée dans une chambre qui échange de l'air avec l'extérieur afin de créer le flux d'air pulsé. Afin de prévenir les odeurs voire les contaminations, l'air échangé entre l'intérieur et l'extérieur de la chambre 4 peut être filtré, par exemple, au moyen de filtres à charbon actif.

L'étape suivante de réduction de volume des matières, notamment par pressage, broyage, déchiquetage ou encore hâchage, peut être réalisée dans la même chambre, de manière séquentielle, ou encore dans une autre chambre, telle qu'illustrée selon les exemples des figures. Le produit final obtenu peut être conditionné notamment reçu dans des sacs ou sachets.

L'invention concerne également un dispositif domestique de traitement des matières organiques convenant pour la mise en oeuvre du procédé. Ce dispositif comprend au moins des moyens pour réduire le volume des déchets organiques et des moyens pour stabiliser les matières organiques.

Selon l'invention, le dispositif comprend en outre :
- des moyens pour réduire le poids en eau des matières organiques de sorte à les stabiliser, consistant essentiellement en des moyens 2 de ventilation,
- des moyens 3 pour réduire le volume des matières organiques stabilisées, notamment par broyage, déchiquetage, mixage, pressage, hâchage, mélassage.

Les moyens 2 de ventilation et les moyens 3 pour réduire le volume des matières organiques stabilisées peuvent agir séquentiellement, l'un après l'autre, dans une même chambre de traitement ou encore dans deux chambres distinctes.

Les moyens 2 de ventilation peuvent notamment comprendre un ou plusieurs ventilateur(s) électrique(s). Il peut s'agir de ventilateurs à faible consommation, d'une puissance de quelques watts seulement comprise notamment entre 1 et 5 watts.

Les moyens pour réduire le poids en eau des matières organiques sont avantageusement dépourvus de résistances électriques ou autre organe de chauffage particulièrement gourmand en énergie.

Selon un mode de réalisation, le dispositif peut comprendre :
- une première chambre 4 pour des matières organiques pourvue notamment d'une ouverture d'alimentation 5, lesdits moyens 2 de ventilation engendrant un flux d'air pulsé dans ladite première chambre 4,
- une deuxième chambre 6 comprenant lesdits moyens 3 pour réduire le volume des matières organiques stabilisées,
- des moyens 7 pour déplacer les matières organiques de la première chambre 4 vers la deuxième chambre 6.

Selon un mode de réalisation, les moyens 2 de ventilation peuvent comprendre un premier ventilateur 9 pour pulser de l'air de l'extérieur vers l'intérieur de la première chambre 4 et un deuxième ventilateur 10 pour extraire l'air de l'intérieur de ladite première chambre 4 vers l'extérieur. Le dispositif peut présenter des moyens de filtration de l'air échangé entre l'intérieur et l'extérieur de la première chambre 4, notamment des filtres placés au niveau d'un passage de prise d'air 20 et d'un passage d'extraction d'air 21.

Selon un mode de réalisation, des moyens de temporisation sont associés aux moyens 2 de ventilation pour la génération du flux d'air pulsé, voire auxdits moyens 7 pour déplacer les matières organiques de la première chambre 4 vers la deuxième chambre 6 ou encore associés aux moyens 3 pour réduire le volume des matières organiques stabilisées.

Plus particulièrement, les moyens de temporisation permettent d'actionner la ventilation ou de l'arrêter pour réaliser un cycle de séchage de matières organiques. Il peut s'agir d'un cycle de séchage où la ventilation est actionnée en continu pendant un temps donné (par exemple durée comprise entre 4 et 20 heures, de préférence entre 4 et 16 heurs) ou encore un cycle de séchage par alternance pendant lequel la ventilation est successivement coupée puis arrêtée selon une séquence donnée. Ce cycle par alternance a pour but de limiter la consommation d'énergie du dispositif.

Eventuellement et afin d'obtenir un séchage uniforme des matières organiques, le dispositif peut présenter des moyens pour inverser le sens du flux d'air pulsé lors du cycle de séchage. Ces moyens peuvent notamment comprendre une horloge et des moyens de commande permettant d'inverser le sens de rotation des ventilateurs.

A la fin du cycle de séchage, les moyens de temporisation peuvent permettre d'actionner les moyens 7 pour déplacer les matières organiques de la première chambre 4 vers la deuxième chambre, voire ensuite actionner les moyens 3 pour réduire de volume les matières organiques dans la deuxième chambre 6.

Selon un autre mode de réalisation, le pilotage de la séquence de séchage peut être asservi au moyen d'un capteur d'hygrométrie ciblant l'humidité des matières organiques dans la première chambre 4. Lorsque l'hygrométrie dans les matières est inférieure à une valeur donnée, la ventilation peut être coupée, et les matières sont déplacées de la première vers la deuxième chambre pour y être réduites de volume.

Selon un mode de réalisation, la première chambre 4 est positionnée supérieure à la deuxième chambre 6, un passage 11 permettant la chute des matières, notamment par gravité, de la première chambre 4 jusqu'à la deuxième chambre 6.

Selon un autre mode de réalisation avantageux, un tambour rotatif 12 permet notamment le retournement desdites matières soumises au flux d'air pulsé dans la première chambre. Avantageusement, selon un exemple non limitatif, ce tambour 12 peut être incliné, voire ajouré et combiné outre la fonction pour le retournement des matières soumises au flux d'air pulsé, une fonction pour le déplacement des matières organiques.

La première chambre 4 peut être équipée d'un bac de réception 13 des liquides associés à un drain 14, notamment afin d'obtenir une séparation des matières organiques et des liquides, préalablement au séchage.

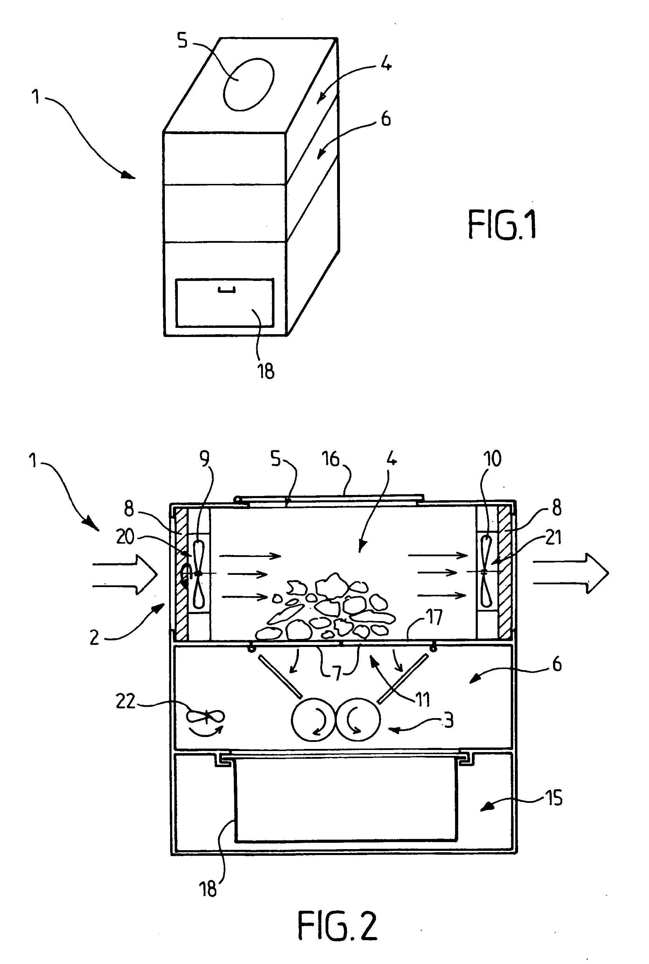

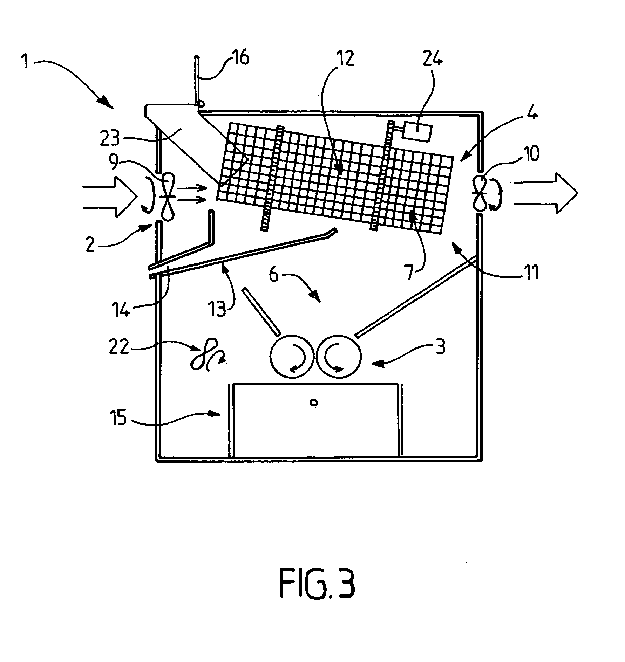

Nous décrivons maintenant deux exemples de réalisation du dispositif conforme à l'invention illustrés respectivement aux figures 2 et 3.

Le dispositif selon l'exemple de la figure 2 se présente sous la forme d'une poubelle compartimentée en plusieurs chambres, à savoir de haut en bas, une première chambre pourvue de moyens 2 de ventilation, une deuxième chambre pourvue des moyens 3 de réduction des volumes et une troisième chambre 15 pour le stockage des matières organiques stabilisées et réduites de volume.

A sa partie supérieure, le dispositif 1 présente une trappe 16 permettant l'introduction des matières organiques dans la première chambre. Un contacteur détectant l'ouverture de la trappe 16 permet d'actionner deux ventilateurs électriques 9, 10 positionnés respectivement au niveau d'une première ouverture constituant une prise d'air 20 et d'une deuxième ouverture 21 constituant une ouverture d'évacuation d'air, ou inversement. Eventuellement, au cours du cycle de séchage, le sens de rotation des ventilateurs peut être inversé afin d'obtenir un séchage homogène des matières dans la première chambre. L'ouverture constituant la prise d'air et l'ouverture constituant l'évacuation d'air sont alors inversées.

Des filtres à charbon actifs peuvent être placés afin de filtrer l'air échangé entre la première chambre et l'air extérieur, notamment placés au niveau des ouvertures dites « d'extraction » et de « prise d'air ».

Une fois le temps de séchage des matières organiques expiré, deux volets 17 de la paroi de fond de la première chambre 4 sont actionnés à l'ouverture, ce qui provoque la chute des matières organiques en direction d'un mécanisme de réduction de volume. Ce mécanisme est constitué de deux rouleaux munis de couteaux sur leur périphérie qui permettent de broyer les produits.

Les produits sont alors entraînés et broyés entre les rouleaux et chutent dans la troisième chambre 15. Cette chambre reçoit notamment un conteneur sous la forme d'un tiroir 18. Ce conteneur peut éventuellement recevoir un sac plastique ou un sachet recevant les matières stabilisées et broyées. Eventuellement, le dispositif peut présenter également des moyens 22 permettant de ventiler légèrement la deuxième chambre 6 voire la troisième chambre 15 où sont stockées les matières organiques, de sorte à éviter que les matières stabilisées ne réabsorbent l'humidité ambiante.

Nous décrivons maintenant l'exemple de la figure 3. Cet exemple se présente également sous la forme d'une poubelle. Les dimensions sont suffisamment faibles pour être intégrées dans une habitation, notamment une cuisine. Cette poubelle comprend notamment de haut en bas :
- une première chambre 4 à l'intérieur de laquelle on réduit le poids en eau des matières organiques,
- une deuxième chambre 6 à l'intérieur duquel on réduit le volume des matières organiques,
- une troisième chambre 15 pour le stockage des matières.

Ce dispositif comprend une ouverture fermée par une trappe 16 à partir de laquelle sont introduits les déchets qui chutent dans un conduit jusqu'à une extrémité d'introduction d'un tambour 12 grillagé et incliné. Les liquides traversent alors la paroi grillagée du tambour, et chutent dans un bac 13 de réception pourvu d'un drain 14.

Des ventilateurs 9, 10, notamment au nombre de deux, permettent de générer un flux d'air pulsé pour sécher les matières organiques dans le tambour 12 et ainsi réduire leur poids en eau. Des filtres à charbon (non illustrés) permettent de filtrer l'air échangé entre l'extérieur et l'intérieur de la chambre 4.

Un moteur électrique 14 dont l'axe est pourvu d'un pignon engrène avec une couronne du tambour permettant de l'entraîner en rotation. La rotation du tambour permet non seulement de retourner les matières organiques afin d'optimiser le séchage mais également de les faire avancer selon le sens d'inclinaison du tambour, vers son autre extrémité. Selon l'angle d'inclinaison du tambour, et le temps nécessaire au séchage, pendant le séchage des matières, la rotation du tambour peut être continue ou encore actionnée par intermittence par des moyens de commande.

Selon un exemple, lorsque le cycle de séchage est terminé, une temporisation de séchage expirée, le tambour peut être actionné en rotation, notamment de manière continue d'un certain nombre de tours afin d'évacuer les déchets préalablement introduits. Les déchets chutent alors dans la deuxième chambre 3 en direction des moyens 3 pour réduire de volume les matières organiques.

Ces moyens pour réduire de volume les matières organiques peuvent notamment se présenter sous la forme de deux rouleaux à couteau permettant de s'entraîner dans des sens inverses pour compresser et broyer les produits entre les rouleaux. Les matières stabilisées et broyées tombent ensuite dans la troisième chambre 15 dans un conteneur notamment pourvu d'un sachet plastique ou papier. Eventuellement, le dispositif peut présenter des moyens 22 de ventilation permettant une légère ventilation de la deuxième chambre 6 ainsi que de la troisième chambre 4, de sorte à éviter que les matières stabilisées ne réabsorbent l'humidité ambiante.

Naturellement, d'autres modes de réalisation auraient pu être mis en oeuvre sans pour autant sortir du cadre de l'invention définie par les revendications ci-après.

## Revendications

1. Procédé domestique de traitement des déchets organiques, notamment domestiques, dans lequel les matières organiques sont collectées, réduites de volume et stabilisées afin de limiter, voire stopper l'activité des bactéries, **caractérisé en ce que** le procédé comprend au moins les étapes suivantes, réalisées dans cet ordre :
- on collecte les matières organiques et on les dispose en vrac,
- on réduit le poids en eau des matières organiques de sorte à les stabiliser en soumettant lesdites matières en vrac à un flux d'air pulsé, prélevé de l'air ambiant de l'habitation, sans autre apport calorifique,
- on réduit le volume des matières organiques stabilisées, notamment par broyage, déchiquetage, mixage, pressage.

2. Procédé selon la revendication 1, dans lequel on retourne les matières organiques soumises au flux d'air pulsé.

3. Procédé selon l'une quelconque des revendications 1 à 2, dans lequel la durée de l'étape de réduction du poids en eau des matières organiques est comprise entre 4 heures et 20 heures, plus particulièrement entre 8 heures et 16 heures.

4. Procédé selon l'une quelconque des revendications 1 à 3, dans lequel l'étape de réduction du poids en eau des matières organiques est mise en oeuvre au moyen de ventilateurs électriques, la consommation électrique de ladite étape de réduction du poids en eau des matières organiques étant inférieure à 10 watts/heure, plus particulièrement inférieure à 4 watts/heure.

5. Dispositif domestique (1) de traitement des matières organiques, convenant pour la mise en oeuvre du procédé selon l'une des revendications 1 à 4, comprenant au moins des moyens pour réduire le volume des déchets organiques et des moyens pour stabiliser les matières organiques **caractérisé en ce que** ledit dispositif comprend :
- des moyens pour réduire le poids en eau de matières organiques de sorte à les stabiliser, consistant essentiellement en des moyens (2) de ventilation, engendrant un flux d'air pulsé.
- des moyens (3) pour réduire le volume des matières organiques stabilisées, notamment par broyage, déchiquetage, mixage, pressage.

6. Dispositif selon la revendication 5, comprenant :
- une première chambre (4) pour des matières organiques pourvue d'une ouverture d'alimentation (5), lesdits moyens (2) de ventilation engendrant ledit flux d'air pulsé dans ladite première chambre (4),
- une deuxième chambre (6) comprenant lesdits moyens (3) pour réduire de volume les matières organiques stabilisées,
- des moyens (7) pour déplacer les matières organiques de la première chambre vers la deuxième chambre.

7. Dispositif selon la revendication 6, dans lequel lesdits moyens (2) de ventilation comprennent un premier ventilateur (9) pour pulser de l'air de l'extérieur vers l'intérieur de la première chambre (4) et un deuxième ventilateur (10) pour extraire l'air de l'intérieur de ladite première chambre (4) vers l'extérieur.

8. Dispositif selon l'une des revendications 6 ou 7 présentant des moyens (8) de filtration de l'air échangé entre l'intérieur et l'extérieur de la première chambre (4).

9. Dispositif selon l'une des revendications 6 à 8, présentant des moyens de temporisation associés auxdits moyens (2) de ventilation, voire auxdits moyens (7) pour déplacer les matières organiques de la première chambre vers la deuxième chambre.

10. Dispositif selon l'une des revendications 6 à 9, dans lequel la première chambre (4) est positionnée supérieure à la deuxième chambre (6), un passage (11) permettant la chute des matières par gravité de la première chambre (4) jusqu'à la deuxième chambre (6).

11. Dispositif selon l'une des revendications 6 à 10, dans lequel un tambour rotatif (12) permet le retournement desdites matières soumises au flux d'air pulsé.

12. Dispositif selon l'une des revendications 6 à 11, dans lequel la première chambre (4) est équipée d'un bac de réception (13) des liquides et d'un drain (14).

## Claims

1. Domestic method for processing organic, particularly domestic, waste, wherein the organic matter is collected, reduced in volume, and stabilized to limit or even stop bacterial activity, **characterised in that** the method includes at least the following steps, carried out in order:
- the organic material is collected and loosely arranged,
- the water weight of the organic matter is reduced to stabilize said matter by subjecting said loose matter to a pulsed air flow, taken from the ambient air of the building, without any additional heat,
- the volume of the stabilised organic material is reduced, in particular by milling, comminution, mixing and pressing.

2. Method according to claim 1, wherein the organic matter subjected to a pulsed air flow is turned over.

3. Method according to any of claims 1 to 2, wherein the duration of the step of reducing the water weight of the organic matter is between 4 hours and 20 hours, more particularly between 8 hours and 16 hours.

4. Method according to any of claims 1 to 3, wherein the step of reducing the water weight of the organic matter is implemented by means of electric fans, the electrical consumption of said step of reducing the water weight of the organic matter being less than 10 watts/hour, more particularly less than 4 watts/hour.

5. Domestic device (1) for processing organic matter, suitable for the implementation of the method according to one of claims 1 to 4, comprising at least means for reducing the volume of the organic waste and means for stabilising the organic matter **characterised in that** said device includes:
- means for reducing the water weight of the organic matter in such a way as to stabilise it, consisting substantially in means (2) of ventilation, generating a pulsed air flow.
- means (3) for reducing the volume of the stabilised organic material, in particular by milling, comminution, mixing and pressing.

6. Device according to claim 5, comprising:
- a first chamber (4) for organic matter provided with a supply opening (5), said means (2) of ventilation generating said pulsed air flow in said first chamber (4),
- a second chamber (6) comprising means (3) in order to reduce the volume of the stabilised organic material,
- means (7) for displacing the organic matter from the first chamber to the second chamber.

7. Device according to claim 6, wherein said means (2) of ventilation include a first fan (9) in order to pulse air from the exterior to the interior of the first chamber (4) and a second fan (10) in order to extract the air from the interior of said first chamber (4) to the exterior.

8. Device according to one of claims 6 or 7 having means (8) for filtering the air exchanged between the interior and the exterior of the first chamber (4).

9. Device according to one of claim 6 to 8, having means of timing associated with said means (2) of ventilation, and even with said means (7) in order to displace the organic matter from the first chamber to the second chamber.

10. Device according to one of claims 6 to 9, wherein the first chamber (4) is positioned higher than the second chamber (6), a passage (11) allowing for the falling of the matter via gravity from the first chamber (4) to the second chamber (6).

11. Device according to one of claims 6 to 10, wherein a rotating drum (12) makes it possible to turn over said matter subjected to the pulsed air flow.

12. Device according to one of claims 6 to 11, wherein the first chamber (4) is provided with a reception tray (13) for liquids and a drain (14).

## Patentansprüche

1. Haushaltsvarfahren zur Verarbeitung organischer Abfälle, insbesondere Haushaltsabfälle, wobei das organische Material gesammelt, im Volumen reduziert und stabilisiert wird, um die Aktivität der Bakterien zu begrenzen, ja sogar zu stoppen, **dadurch gekennzeichnet, dass** das Verfahren mindestens die folgenden Schritte umfasst, die in dieser Reihenfolge durchgeführt werden:
- Sammeln des organischen Materials und Bereitstellen als Schüttgut;
- Reduzieren des Gewichts des organischen Materials an Wasser, um es zu stabilisieren, indem, das organische Schüttgut-Material einem Impulsluftstrom ausgesetzt wird, der aus der Umgebungsluft der Wohnung entnommen wird, ohne weiteren Wärmeeintrag,
- Reduzieren des Volumens des stabilisierten organischen Materials, insbesondere durch Mahlen, Zerkleinern, Mischen und Pressen.

2. Verfahren nach Anspruch 1, wobei das organische Material, das dem Impulsluftstrom ausgesetzt wurde, gewendet wird.

3. Verfahren nach einem der Ansprüche 1 bis 2, wobei die Dauer des Schritts des Reduzierens des Gewichts des organischen Materials an Wasser zwischen 4 Stunden und 20 Stunden, insbesondere zwischen 8 Stunden und 16 Stunden liegt.

4. Verfahren nach einem der Ansprüche 1 bis 3, wobei der Schritt des Reduzierens des Gewichts des organischen Materials an Wasser mit Hilfe von elektrischen. Ventilatoren durchgerührt wird, wobei der Stromverbrauch des Schritts des Reduzierens des Gewichts des organischen Materials an Wasser unter 10 Wattstunden, insbesondere unter 4 Wattstunden liegt.

5. Haushaltsvorrichtung (1) zur Verarbeitung organischen Materials, das für die Durchführung des Verfahrens nach einem der Ansprüche 1 bis 4 geeignet ist, umfassend mindestens Mittel, um das Volumen der organischen Abfälle zu reduzieren und Mittel, um das organische Material zu stabilisieren, **dadurch gekennzeichnet, dass** die Vorrichtung Folgendes umfasst:
- Mittel zur Reduzierung des Gewichts von organischem Material an Wasser, um es zu stabilisieren, bestehend im Wesentlichen aus Mitteln (2) zur Ventilation, die einem Impulsluftstrom erzeugen;
- Mittel (3) zur Reduzierung des Volumens des stabilisierten organischen Materials, insbesondere durch Mahlen, Zerkleinern, Mischen und Pressen.

6. Vorrichtung nach Anspruch 5, umfassend:
- eine erste Kammer (4) für das organische Material, die mit einer Zufuhröffnung (5) versehen ist, wobei die Mittel (2) zur Ventilation den Impulsluftstrom in der ersten Kammer (4) erzeugen,
- eine zweite Kammer (6), umfassend die Mittel (3), um das Volumen des stabilisierten organischen Materials zu reduzieren,
- Mittel (7), um das organische Material aus der ersten Kammer in die zweite; Kammer zu verschieben.

7. Vorrichtung nach Anspruch 6, wobei die Mittel (2) zur Ventilation einen ersten Ventilator (9) umfassen, um Luft von außen in das Innere der ersten Kammer (4) zu pulsieren und einen zweiten Ventilator (10), um Luft vom Inneren der ersten Kammer (4) nach außen zu extrahieren.

8. Vorrichtung nach einem der Ansprüche 6 oder 7, umfassend Mittel (8) zur Filtrierung der Luft, die zwischen dem Inneren und dem Äußeren der ersten Kammer (4) ausgetauscht wird.

9. Vorrichtung nach einem der Anspruche 6 bis 8, umfassend Mittel zur Zeitsteuerung, die mit den Mitteln (2) zur Ventilation, ja sogar den Mitteln (7) zur Verschiebung des organischen Materials aus der ersten Kammer in die zweite Kammer assoziiert sind.

10. Vorrichtung nach einem der Ansprüche 6 bis 9, wobei die erste Kammer (4) höher als die zweite Kammer (6) angebracht ist, wobei ein Durchgang (11) den Fall des Materials durch die Scherkraft aus der ersten Kammer (4) in die zweite Kammer (6) ermöglicht.

11. Vorrichtung nach einem der Ansprüche 6 bis 10, wobei eine Drehtrommel (12) die Wendung des Materials, das dem Impulsluftstrom ausgesetzt ist, ermöglicht.

12. Vorrichtung nach einem der Ansprüche 6 bis 11, wobei die erste Kammer (4) mit einem Behälter zum Auffangen (13) der Flüssigkeiten und einer Entwässerung (14) ausgestattet ist.
